# EUROPÄISCHE PATENTANMELDUNG

(11) **EP 3 367 188 A1**
(43) Veröffentlichungstag der Anmeldung: **29.08.2018**
(21) Anmeldenummer: 17158401.4
(22) Anmeldetag: 28.02.2017
(51) Int. Cl.: G05B 19/042

(54) **VERFAHREN ZUM BETRIEB EINES ENGINEERING-SYSTEMS FÜR EIN INDUSTRIELLES PROZESSAUTOMATISIERUNGSSYSTEM UND STEUERUNGSPROGRAMM**

(71) Anmelder: Siemens Aktiengesellschaft, 80333 München (DE)
(72) Erfinder: Beilschmidt, Dirk, 53332 Bornheim (DE); Wojciechowski, Alexander, 53177 Bonn (DE); Zhelyabovskaya, Lyudmila, 53127 Bonn (DE)

(57) **Zusammenfassung**

In einem Engineering-System für ein industrielles Prozessautomatisierungssystem werden Komponenten des industriellen Prozessautomatisierungssystems jeweils durch ein computerbasiertes Objekt innerhalb des Engineering-Systems repräsentiert und in zumindest einer Server-seitigen Engineering-Datenbank (152) persistent gespeichert. Funktionen des Engineering-Systems werden als Dienste (131-133) über eine Server-seitige einheitliche Dienstschnittstelle (130) verfügbar gemacht. Auf in der Engineering-Datenbank (152) gespeicherte Objekte gerichtete Client-seitige Such- bzw. Bearbeitungsanfragen werden über eine separate Server-seitige Auftragsschnittstelle (120) an einen Auftragsbearbeitungsdienst (121) weitergeleitet. Prozessabläufe zur Bearbeitung von Such- bzw. Bearbeitungsanfragen werden mittels Auftragsbearbeitungsobjekten spezifiziert, die in einer separaten Auftragsdatenbank (151) gespeichert werden.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Mittels eines Engineering-Systems können insbesondere Steuerungsprogramme für Automatisierungsgeräte projektiert werden, die zur Visualisierung eines Abbilds einer technischen Anlage oder einer komplexen Maschine und deren Steuerung bzw. Regelung vorgesehen sind. Zur Laufzeit der Steuerungsprogramme bzw. während eines Runtime-Betriebs wird ein technischer Prozess durch Automatisierungsgeräte, wie speicherprogrammierbare Steuerungen, gesteuert bzw. geregelt. Im Rahmen einer Prozessüberwachung während des Runtime-Betriebs kann eine Bedienperson Prozessbilder aufrufen, um einen Überblick über einen aktuellen Anlagenzustand zu erhalten sowie eine Prozessführung bzw. -bedienung wahrzunehmen.

In EP 1 166 215 B1 ist ein Verfahren zur automatischen Wiedergewinnung von Engineering-Daten aus technischen Anlagen beschrieben, bei dem Engineering- und Runtime-Objekte durch ein einheitliches Objektmodell beschrieben werden. Dadurch lässt sich eine direkte Entsprechung zwischen Engineering-Objekten und Runtime-Objekten auf Objektebene festlegen, so dass kein Informationsverlust durch eine Abbildung von Anlagenkomponenten auf das Objektmodell entsteht. Außerdem kann eine direkte Kommunikation zwischen Engineering- und Runtime-Objekten erfolgen.

Aus EP 2 808 749 B1 ist ein Verfahren zum Austausch von Steuerungsinformationen zwischen Bedien- und Beobachtungsgeräten eines industriellen Automatisierungssystems bekannt. Anhand der Steuerungsinformationen wird ein zumindest ausschnittweises Abbild einer mittels Automatisierungsgeräten geregelten oder gesteuerten technischen Anlage an einer graphischen Benutzerschnittstelle eines jeweiligen Bedien- und Beobachtungsgeräts visualisiert. Dem visualisierten Abbild sind Elemente der technischen Anlage repräsentierende computerbasierte Objekte zugeordnet, die durch eine auf einem jeweiligen Bedien- und Beobachtungsgerät eingerichtete Laufzeitumgebung bereitgestellt werden. Sämtliche an unterschiedlichen Bedien- und Beobachtungsgeräten bereitgestellten Objekttypen werden entsprechend einem einheitlichen Adressierungsschema für einen geräteübergreifenden Zugriff verfügbar gemacht.

US 6 063 128 betrifft ein System, das ein Speichergerät, eine erste und zweite Hardware- oder Software-Plattform, ein persistentes portables Datenmodell und computerbasierte Modellbildungssysteme umfasst, die von der ersten und zweiten Plattform abhängig sind. Jede Plattform weist eine Schnittstelle zum Speichergerät auf und stellt systemabhängige Dienste bereit. Der ersten Plattform sind ein erster Betriebssystem-Typ sowie ein erster Computer-Hardware-Typ zugeordnet, während der zweiten Plattform ein zweiter Betriebssystem-Typ sowie ein zweiter Computer-Hardware-Typ zugeordnet sind. Das portable Datenmodell ist im Speichergerät in einem plattformunabhängigen Format gespeichert und umfasst persistente Komponenten-Objekte. Darüber hinaus ist das computerbasierte Modellbildungssystem für die erste Plattform in einem ersten Speicherbereich des Speichergeräts gespeichert, während das computerbasierte Modellbildungssystem für die zweite Plattform in einem zweiten Speicherbereich des Speichergeräts gespeichert ist. Jedes computerbasierte Modellbildungssystem stellt Dienste bereit, um das portable Datenmodell aus dem Speichergerät abzurufen, das Datenmodell durch Hinzufügen und Entfernen von Komponenten-Objekten zu ändern und das Datenmodell persistent im Speichergerät zu speichern. Außerdem umfasst jedes computerbasierte Modellbildungssystem einen statischen Kernel und ein dynamisches Software-Framework. Die Kernel laufen auf der jeweiligen Plattform ab und bilden Schnittstellen zum zugeordneten Betriebssystem und zur entsprechenden Computer-Hardware. Die Software-Frameworks laufen auf der jeweiligen Plattform ab, bilden Schnittstellen zum zugeordneten Kernel und stellen jeweils eine plattformunabhängige graphische Benutzerschnittstelle bereit.

Mittels eines Engineering-Systems verwaltete Anlagendaten unterliegen während eines Lebenszyklus einer technischen Anlage ständigen Anpassungen und Änderungen, insbesondere im Rahmen von Wartungs- oder Modernisierungsarbeiten. Dabei greifen üblicherweise äußerst heterogene Benutzergruppen mittels unterschiedlicher stationärer oder mobiler Bediengeräte auf die Anlagendaten zu.

Der vorliegenden Erfindung liegt die Aufgabe zugrunde, ein zuverlässiges und leistungsfähiges Verfahren zum Betrieb eines Engineering-Systems für ein industrielles Prozessautomatisierungssystem zu schaffen, das einen Zugriff auf Engineering-Daten mittels zahlreicher, unterschiedlicher Bediengeräte ermöglicht, und ein Steuerungsprogramm zu dessen Implementierung anzugeben.

Diese Aufgabe wird erfindungsgemäß durch ein Verfahren mit den in Anspruch 1 angegebenen Merkmalen und durch ein Steuerungsprogramm mit den in Anspruch 10 angegebenen Merkmalen gelöst.

Entsprechend dem erfindungsgemäßen Verfahren zum Betrieb eines Engineering-Systems für ein industrielles Prozessautomatisierungssystem werden Komponenten des industriellen Prozessautomatisierungssystems jeweils durch ein computerbasiertes Objekt innerhalb des Engineering-Systems repräsentiert und in zumindest einer Server-seitigen Engineering-Datenbank persistent gespeichert. Die Objekte werden Server-seitig innerhalb einer hierarchischen Objektstruktur verwaltet, wobei die Objektstruktur Abhängigkeiten zwischen Objekten umfasst. Funktionen des Engineering-Systems werden als Dienste über eine Server-seitige einheitliche Dienstschnittstelle verfügbar gemacht.

Erfindungsgemäß werden auf in der Engineering-Datenbank gespeicherte Objekte gerichtete Client-seitige Such- bzw. Bearbeitungsanfragen über eine separate Server-seitige Auftragsschnittstelle an einen Auftragsbearbeitungsdienst weitergeleitet. Prozessabläufe zur Bearbeitung von Such- bzw. Bearbeitungsanfragen werden mittels Auftragsbearbeitungsobjekten spezifiziert, die in einer separaten Auftragsdatenbank gespeichert werden. Dabei umfassen die Prozessabläufe Zustände einer Bearbeitung von Such- bzw. Bearbeitungsanfragen sowie ereignisabhängige Zustandsübergänge. Durch eine entkoppelte Bereitstellung der Dienste des Engineering-Systems und des Auftragsbearbeitungsdienstes sowie eine Separierung von Engineering-Datenbank und Auftragsdatenbank lassen sich Prozessabläufe für Such- bzw. Bearbeitungsanfragen einfach und ohne unmittelbaren Zugriff auf produktiv genutzte Anlagendaten anpassen.

Entsprechend einer bevorzugten Ausgestaltung des erfindungsgemäßen Verfahrens geben die Dienste des Engineering-Systems und der Auftragsbearbeitungsdienst durch andere Dienste nutzbare Ereignismeldungen über eine einheitliche Ereignisschnittstelle aus. Die Ereignismeldungen sind durch die Dienste des Engineering-Systems bzw. den Auftragsbearbeitungsdienst zur ereignisabhängigen Steuerung auswählbar. Auf diese Weise können unabhängig voneinander bereitgestellte Dienste zuverlässig und effizient miteinander verknüpft werden.

Vorzugsweise sind die einheitliche Dienstschnittstelle und die Auftragsschnittstelle mit einem Server-seitigen Gateway verbunden, durch das die Dienste des Engineering-Systems und der Auftragsbearbeitungsdienst Client-spezifisch verfügbar gemacht werden. Vorteilhafterweise wird für Client-spezifische Dienstanforderungen zumindest ein jeweiliger Client-Typ identifiziert. Anhand dessen können Client-spezifische Dienstanforderungen an einen Client-spezifischen Dienstzugangspunkt des Gateway weitergeleitet werden. Auf diese Weise können die Dienste des Engineering-Systems und der Auftragsbearbeitungsdienst für eine Vielzahl unterschiedlicher Client-Gerätetypen verfügbar gemacht werden. Entsprechend einer weiteren vorteilhaften Ausgestaltung der vorliegenden Erfindung werden Clients mittels des Gateway für eine Nutzung der Dienste des Engineering-Systems und des Auftragsbearbeitungsdiensts authentifiziert. Darüber hinaus kann das Engineering-System mehrere Server umfassen, an die Client-seitige Dienstanforderungen auslastungsabhängig zur Bearbeitung weitergeleitet werden. Somit ist eine einfache Skalierung des Engineering-Systems möglich.

Entsprechend einer weiteren vorteilhaften Ausgestaltung des erfindungsgemäßen Verfahrens werden durch eine Benutzerselektion vorgegebene Objekte für eine Bearbeitung aus der Engineering-Datenbank in zumindest einen Bearbeitungsspeicherbereich geladen. Dabei ist den Objekten und dem Bearbeitungsspeicherbereich jeweils ein zugriffsberechtigter Benutzer zugeordnet. Ein erster Bearbeitungsspeicherbereich, der als zugriffsberechtigter Benutzer einem zweiten Bearbeitungsspeicherbereich zugeordnet ist, ist hierarchisch vorrangig gegenüber dem zweiten Bearbeitungsspeicherbereich. Damit ist ein erstes Objekt in einem vorrangigen Bearbeitungsspeicherbereich, das einen identischen Objektidentifikator wie ein zweites Objekt in einem nachrangigen Bearbeitungsspeicherbereich aufweist, Vorgänger des zweiten Objekts ist.

Bei Einleitung einer Client-seitigen Benutzerfreigabe von in einen ausgewählten Bearbeitungsspeicherbereich geladenen freizugebenden Objekten wird vorteilhafterweise überprüft, ob dem ausgewählten Bearbeitungsspeicherbereich ein direkt vorrangiger Bearbeitungsspeicherbereich zugeordnet ist. Bei einem negativen Überprüfungsergebnis werden die in den ausgewählten Bearbeitungsspeicherbereich geladenen freizugebenden Objekte in die Engineer-Datenbank zurückgeschrieben. Andernfalls erfolgt ein Zurückschreiben in den direkt vorrangigen Bearbeitungsspeicherbereich. Auf diese Weise kann eine Vielzahl unterschiedlicher Benutzer Projektierungsarbeiten durchführen.

Vorzugsweise ist Bearbeitungsspeicherbereichen jeweils eine Ebeneninformation zugeordnet. Dabei unterscheidet sich die einem ausgewählten Bearbeitungsspeicherbereich zugeordnete Ebeneninformation von der einem direkt vorrangigen Bearbeitungsspeicherbereich zugeordneten Ebeneninformation um eine Stufe. Damit ist ein erstes Objekt in einem direkt vorrangigen Bearbeitungsspeicherbereich, das einen identischen Objektidentifikator wie ein zweites Objekt in einem nachrangigen Bearbeitungsspeicherbereich und einen übereinstimmenden zugriffsberechtigten Benutzer aufweist, direkter Vorgänger des zweiten Objekts.

Entsprechend einer besonders bevorzugten Ausführungsform der vorliegenden Erfindung werden in einen Bearbeitungsspeicherbereich geladene Objekte an einer Client-seitigen graphischen Benutzerschnittstelle gegenüber in der Datenbank gespeicherten Objekten überlagert dargestellt. In entsprechender Weise werden in einen nachrangigen Bearbeitungsspeicherbereich geladene Objekte an der Client-seitigen graphischen Benutzerschnittstelle gegenüber in einen vorrangigen Bearbeitungsspeicherbereich geladenen Objekten überlagert dargestellt. Auf diese Weise werden nur zur Bearbeitung tatsächlich benötigte Daten in den zumindest einen Benutzerspeicherbereich geladen, während sonstige produktiv genutzte Anlagendaten in der Engineering-Datenbank unverändert bleiben.

Das erfindungsgemäße Steuerungsprogramm zum Betrieb eines Engineering-Systems für ein industrielles Prozessautomatisierungssystem ist in einen Arbeitsspeicher eines Rechners ladbar und weist zumindest einen Codeabschnitt auf, bei dessen Ausführung vorangehend erläuterte Schritte durchgeführt werden, wenn das Steuerungsprogramm im Rechner abläuft.

Die vorliegende Erfindung wird nachfolgend an einem Ausführungsbeispiel anhand der Zeichnung näher erläutert. Es zeigt
- Figur 1: eine Anordnung mit mehreren Clients und einem Server eines Engineering-System für ein industrielles Prozessautomatisierungssystem,
- Figur 2: eine schematische Darstellung einer Überlagerung von Bearbeitungsspeicherbereichen an einer graphischen Benutzerschnittstelle eines Clients.

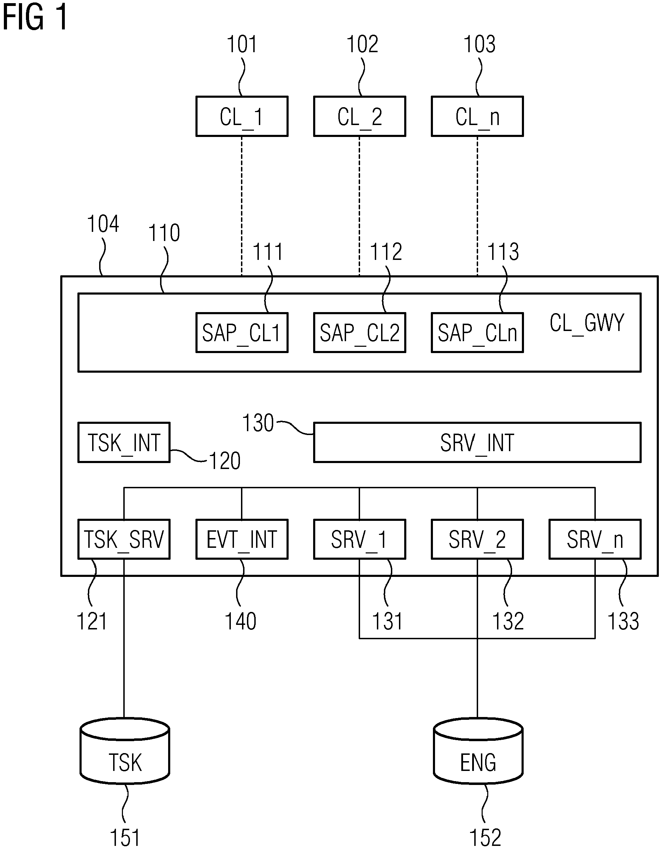

Die in Figur 1 dargestellte Anordnung umfasst einen Server 104 eines Engineering-Systems für ein industrielles Prozessautomatisierungssystem, bei dem Komponenten des industriellen Prozessautomatisierungssystems jeweils durch ein computerbasiertes Engineering-Objekt repräsentiert und in einer Server-seitigen Engineering-Datenbank 152 persistent gespeichert werden. Die Engineering-Objekte werden durch den Server 104 innerhalb einer hierarchischen Objektstruktur verwaltet. Dabei umfasst die Objektstruktur Abhängigkeiten zwischen den Engineering-Objekten. Funktionen des Engineering-Systems werden für eine Vielzahl von stationären oder mobilen Clients 101-103, die sich hinsichtlich Gerätetyp, Hardware-Plattform oder Software-Plattform stark unterscheiden können, als Dienste 131-133 über eine Server-seitige einheitliche Dienstschnittstelle 130 verfügbar gemacht. Auf in der Engineering-Datenbank 152 gespeicherte Engineering-Objekte gerichtete Client-seitige Such- bzw. Bearbeitungsanfragen werden über eine separate Server-seitige Auftragsschnittstelle 120 an einen Auftragsbearbeitungsdienst 121 weitergeleitet.

Prozessabläufe zur Bearbeitung von Such- bzw. Bearbeitungsanfragen werden mittels Auftragsbearbeitungsobjekten spezifiziert, die in einer separaten Auftragsdatenbank 151 des Engineering-Systems gespeichert werden. Dabei umfassen die Prozessabläufe Zustände einer Bearbeitung von Such- bzw. Bearbeitungsanfragen sowie ereignisabhängige Zustandsübergänge.

Die Dienste 131-133 des Engineering-Systems und der Auftragsbearbeitungsdienst 121 geben über eine einheitliche Ereignisschnittstelle 140 durch andere Dienste nutzbare Ereignismeldungen aus, die durch die Dienste 131-133 des Engineering-Systems bzw. durch den Auftragsbearbeitungsdienst 121 zur ereignisabhängigen Steuerung ausgewählt bzw. abonniert werden können.

Die einheitliche Dienstschnittstelle 130 und die Auftragsschnittstelle 120 sind mit einem Server-seitigen Gateway 110 verbunden, durch das die Dienste 131-133 des Engineering-Systems und der Auftragsbearbeitungsdienst 121 Client-spezifisch verfügbar gemacht werden. Hierzu identifiziert das Gateway 110 bei Client-seitigen Dienstanforderungen zumindest einen jeweiligen Client-Typ. Anhand dessen werden Client-spezifische Dienstanforderungen an einen von mehreren Client-spezifischen Dienstzugangspunkten 111-113 des Gateway 110 weitergeleitet. Darüber hinaus ist das Gateway 110 dafür vorgesehen, Clients 101-103 für eine Nutzung der Dienste 131-133 des Engineering-Systems und des Auftragsbearbeitungsdiensts 121 zu authentifizieren. Grundsätzlich kann das Engineering-System mehrere Server umfassen, die prinzipiell wie der Server 104 ausgestaltet sind und an die Client-seitige Dienstanforderungen auslastungsabhängig zur Bearbeitung weitergeleitet werden.

Durch eine Erstellung von nachfolgend als Arbeitsschichten bezeichneten Bearbeitungsspeicherbereichen des Engineering-Systems können Engineering-Daten und Anlagenobjekte parallel von mehreren Benutzern bearbeitet werden. Bei einer Bearbeitung von Engineering-Objekten in Arbeitsschichten bleibt eine originäre Datenbasis einer technischen Anlage bis auf weiteres unverändert. Erst nach Bearbeitung werden vorgenommene Änderungen der Engineering-Objekte im Rahmen eines Freigabe-Prozesses mit der originären Datenbasis konsolidiert und in einen operativ genutzten Produktivdatenbestand der Anlage freigegeben.

Durch eine Benutzerselektion vorgegebene Engineering-Objekte werden für eine Bearbeitung aus der Engineering-Datenbank 152 lesend und schreibend in zumindest eine Arbeitsschicht geladen. Dabei ist den Engineering-Objekten und der Arbeitsschicht jeweils zumindest ein zugriffsberechtigter Benutzer bzw. Eigentümer zugeordnet. Zusätzlich zu den aus der Engineering-Datenbank 152 geladenen Engineering-Objekten sind in einer Arbeitsschicht neue Engineering-Objekte erzeugbar.

Arbeitsschichten können hierarchische Abhängigkeiten zu anderen Arbeitsschichten aufweisen. Eine erste Arbeitsschicht, die als Eigentümer einer zweiten Arbeitsschicht zugeordnet ist, ist dabei hierarchisch vorrangig gegenüber der zweiten Arbeitsschicht. Dementsprechend ist ein erstes Engineering-Objekt in einer vorrangigen Arbeitsschicht, das einen identischen Objektidentifikator wie ein zweites Engineering-Objekt in einer nachrangigen Arbeitsschicht aufweist, Vorgänger des zweiten Engineering-Objekts. Im vorliegenden Ausführungsbeispiel ist den Arbeitsschichten jeweils eine Ebeneninformation zugeordnet. Die einer ausgewählten Arbeitsschicht zugeordnete Ebeneninformation unterscheidet sich von der einer direkt vorrangigen Arbeitsschicht zugeordneten Ebeneninformation um genau eine Stufe. Ein erstes Engineering-Objekt in einer direkt vorrangigen Arbeitsschicht, das einen identischen Objektidentifikator wie ein zweites Engineering-Objekt in einer nachrangigen Arbeitsschicht und denselben Eigentümer aufweist, ist direkter Vorgänger des zweiten Engineering-Objekts.

Bei Client-seitiger Einleitung eines Freigabe-Prozesses von in eine ausgewählte Arbeitsschicht geladenen freizugebenden Engineering-Objekten wird überprüft, ob der ausgewählten Arbeitsschicht eine direkt vorrangige Arbeitsschicht zugeordnet ist. Bei einem negativen Überprüfungsergebnis werden die in die ausgewählte Arbeitsschicht geladenen freizugebenden Engineering-Objekte in die Engineer-Datenbank 152 zurückgeschrieben. Andernfalls werden die in die ausgewählte Arbeitsschicht geladenen freizugebenden Engineering-Objekte in die direkt vorrangige Arbeitsschicht zurückgeschrieben.

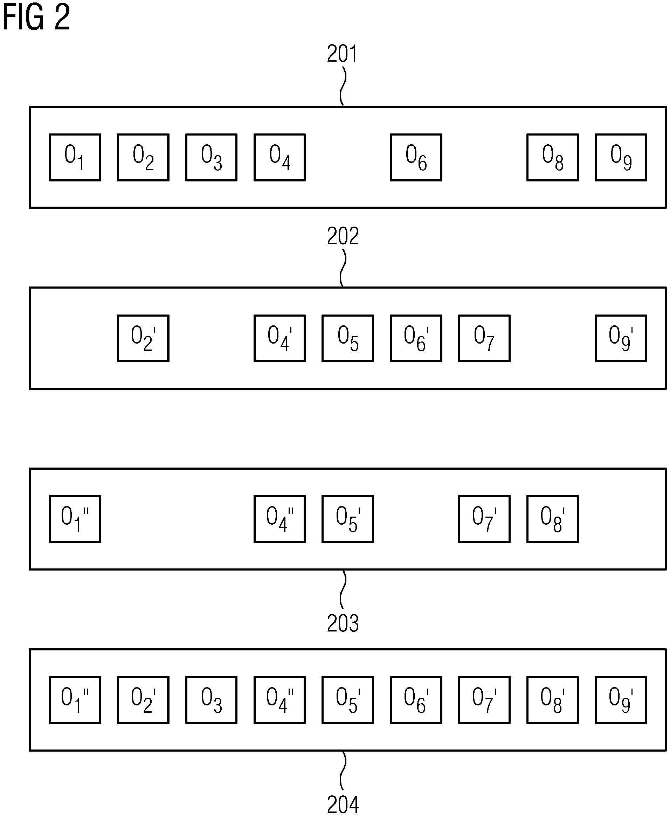

Entsprechend der in Figur 2 schematisch dargestellten Überlagerung von Arbeitsschichten 202, 203 an einer Client-seitigen graphischen Benutzerschnittstelle 204 werden in eine ausgewählte Arbeitsschicht 203 geladene Engineering-Objekte O₁", O₄", O₅', O₇', O₈' einerseits gegenüber dem in der Server-seitigen Datenbank gespeicherten Produktivdatenbestand O₁-O₄, O₆, O₈-O₉ überlagert dargestellt. Andererseits werden diese Engineering-Objekte O₁", O₄", O₅', O₇', O₈' gegenüber in eine vorrangige Arbeitsschicht 202 geladenen Engineering-Objekten O₂', O₄', O₅, O₆', O₇, O₉' überlagert dargestellt. An der graphischen Benutzerschnittstelle 204 sind entsprechend dem in Figur 2 dargestellten Beispiel resultierend die Engineering-Objekte O₁", O₂', O₃, O₄", O₅', O₆', O₇', O₈', O₉' sichtbar.

## Patentansprüche

1. Verfahren zum Betrieb eines Engineering-Systems für ein industrielles Prozessautomatisierungssystem, bei dem
- Komponenten des industriellen Prozessautomatisierungssystems jeweils durch ein computerbasiertes Objekt innerhalb des Engineering-Systems repräsentiert und in zumindest einer Server-seitigen Engineering-Datenbank (152) persistent gespeichert werden,
- die Objekte Server-seitig innerhalb einer hierarchischen Objektstruktur verwaltet werden, wobei die Objektstruktur Abhängigkeiten zwischen Objekten umfasst,
- Funktionen des Engineering-Systems als Dienste (131-133) über eine Server-seitige einheitliche Dienstschnittstelle (130) verfügbar gemacht werden,
- auf in der Engineering-Datenbank (152) gespeicherte Objekte gerichtete Client-seitige Such- und/oder Bearbeitungsanfragen über eine separate Server-seitige Auftragsschnittstelle (120) an einen Auftragsbearbeitungsdienst (121) weitergeleitet werden,
- Prozessabläufe zur Bearbeitung von Such- und/oder Bearbeitungsanfragen mittels Auftragsbearbeitungsobjekten spezifiziert werden, die in einer separaten Auftragsdatenbank (151) gespeichert werden, wobei die Prozessabläufe Zustände einer Bearbeitung von Such- und/oder Bearbeitungsanfragen sowie ereignisabhängige Zustandsübergänge umfassen.

2. Verfahren nach Anspruch 1,
bei dem die Dienste (131-133) des Engineering-Systems und der Auftragsbearbeitungsdienst (121) über eine einheitliche Ereignisschnittstelle (140) durch andere Dienste nutzbare Ereignismeldungen ausgeben, die durch die Dienste (131-133) des Engineering-Systems und/oder den Auftragsbearbeitungsdienst (121) zur ereignisabhängigen Steuerung auswählbar sind.

3. Verfahren nach einem der Ansprüche 1 oder 2,
bei dem die einheitliche Dienstschnittstelle (130) und die Auftragsschnittstelle (120) mit einem Server-seitigen Gateway (110) verbunden sind, durch das die Dienste (131-133) des Engineering-Systems und der Auftragsbearbeitungsdienst (121) Client-spezifisch verfügbar gemacht werden.

4. Verfahren nach Anspruch 3,
bei dem für Client-spezifische Dienstanforderungen zumindest ein jeweiliger Client-Typ identifiziert wird und Client-spezifische Dienstanforderungen anhand dessen an einen Client-spezifischen Dienstzugangspunkt (111-113) des Gateway (110) weitergeleitet werden.

5. Verfahren nach einem der Ansprüche 3 oder 4,
bei dem Clients (101-103) mittels des Gateway (110) für eine Nutzung der Dienste (131-133) des Engineering-Systems und des Auftragsbearbeitungsdiensts (121) authentifiziert werden.

6. Verfahren nach einem der Ansprüche 1 bis 5,
bei dem das Engineering-System mehrere Server umfasst, an die Client-seitige Dienstanforderungen auslastungsabhängig zur Bearbeitung weitergeleitet werden.

7. Verfahren nach einem der Ansprüche 1 bis 6,
bei dem durch eine Benutzerselektion vorgegebene Objekte für eine Bearbeitung aus der Engineering-Datenbank (201) in zumindest einen Bearbeitungsspeicherbereich (202, 203) geladen werden, wobei den Objekten und dem Bearbeitungsspeicherbereich jeweils ein zugriffsberechtigter Benutzer zugeordnet ist, bei dem ein erster Bearbeitungsspeicherbereich (202), der als zugriffsberechtigter Benutzer einem zweiten Bearbeitungsspeicherbereich (203) zugeordnet ist, hierarchisch vorrangig gegenüber dem zweiten Bearbeitungsspeicherbereich (203) ist, bei dem ein erstes Objekt (O₄', O₅, O₇) in einem vorrangigen Bearbeitungsspeicherbereich (202), das einen identischen Objektidentifikator wie ein zweites Objekt (O₄", O₅', O₇') in einem nachrangigen Bearbeitungsspeicherbereich (203) aufweist, Vorgänger des zweiten Objekts ist, bei Einleitung einer Client-seitigen Benutzerfreigabe von in einen ausgewählten Bearbeitungsspeicherbereich (203) geladenen freizugebenden Objekten überprüft wird, ob dem ausgewählten Bearbeitungsspeicherbereich (203) ein direkt vorrangiger Bearbeitungsspeicherbereich (202) zugeordnet ist, bei dem die in den ausgewählten Bearbeitungsspeicherbereich geladenen freizugebenden Objekte bei einem negativen Überprüfungsergebnis in die Engineer-Datenbank (201) zurückgeschrieben werden und bei dem die in den ausgewählten Bearbeitungsspeicherbereich geladenen freizugebenden Objekte bei einem positiven Überprüfungsergebnis in den direkt vorrangigen Bearbeitungsspeicherbereich zurückgeschrieben werden.

8. Verfahren nach Anspruch 7,
bei dem Bearbeitungsspeicherbereichen jeweils eine Ebeneninformation zugeordnet ist, bei dem sich die einem ausgewählten Bearbeitungsspeicherbereich zugeordnete Ebeneninformation von der einem direkt vorrangigen Bearbeitungsspeicherbereich zugeordneten Ebeneninformation um eine Stufe unterscheidet und bei dem ein erstes Objekt in einem direkt vorrangigen Bearbeitungsspeicherbereich, das einen identischen Objektidentifikator wie ein zweites Objekt in einem nachrangigen Bearbeitungsspeicherbereich und einen übereinstimmenden zugriffsberechtigten Benutzer aufweist, direkter Vorgänger des zweiten Objekts ist.

9. Verfahren nach einem der Ansprüche 7 oder 8,
bei dem in einen Bearbeitungsspeicherbereich geladene Objekte an einer Client-seitigen graphischen Benutzerschnittstelle gegenüber in der Datenbank gespeicherten Objekten überlagert dargestellt werden und bei dem in einen nachrangigen Bearbeitungsspeicherbereich geladene Objekte an der Client-seitigen graphischen Benutzerschnittstelle gegenüber in einen vorrangigen Bearbeitungsspeicherbereich geladenen Objekten überlagert dargestellt werden.

10. Steuerungsprogramm zum Betrieb eines Engineering-Systems für ein industrielles Prozessautomatisierungssystem, wobei das Steuerungsprogramm in einen Arbeitsspeicher eines Rechners ladbar ist und zumindest einen Codeabschnitt aufweist, bei dessen Ausführung
- Komponenten des industriellen Prozessautomatisierungssystems jeweils durch ein computerbasiertes Objekt innerhalb des Engineering-Systems repräsentiert und in zumindest einer Server-seitigen Engineering-Datenbank persistent gespeichert werden,
- die Objekte Server-seitig innerhalb einer hierarchischen Objektstruktur verwaltet werden, wobei die Objektstruktur Abhängigkeiten zwischen Objekten umfasst,
- Funktionen des Engineering-Systems als Dienste über eine Server-seitige einheitliche Dienstschnittstelle verfügbar gemacht werden,
- auf in der Engineering-Datenbank gespeicherte Objekte gerichtete Client-seitige Such- und/oder Bearbeitungsanfragen über eine separate Server-seitige Auftragsschnittstelle an einen Auftragsbearbeitungsdienst weitergeleitet werden,
- Prozessabläufe zur Bearbeitung von Such- und/oder Bearbeitungsanfragen mittels Auftragsbearbeitungsobjekten spezifiziert werden, die in einer separaten Auftragsdatenbank gespeichert werden, wobei die Prozessabläufe Zustände einer Bearbeitung von Such- und/oder Bearbeitungsanfragen sowie ereignisabhängige Zustandsübergänge umfassen,
wenn das Steuerungsprogramm im Rechner abläuft.
